# EUROPÄISCHE PATENTANMELDUNG

(11) **EP 1 128 689 A2**
(43) Veröffentlichungstag der Anmeldung: **29.08.2001**
(21) Anmeldenummer: 01101727.4
(22) Anmeldetag: 25.01.2001
(51) Int. Cl.: H04Q 7/32, H04M 1/725

(54) **Vorrichtung zur Aufnahme eines mobilen Kommunikationsendgerätes**

(30) Priorität: 23.02.2000 DE 10008290
(71) Anmelder: SIEMENS AKTIENGESELLSCHAFT, 80333 München (DE)
(72) Erfinder: Brehler, Markus, 82065 Baierbrunn (DE)

(57) **Zusammenfassung**

Vorrichtung (1, 1') zur Aufnahme eines mobilen Kommunikations-Endgerätes (3) oder zum Anschluß an ein solches zur Übertragung von Daten, insbesondere Text- und/oder Bilddaten zur Anzeige bzw. Ausgabe über das Kommunikations-Endgerät, mit einer Speichereinrichtung (11) zur Speicherung der Daten, und einer ersten, insbesondere leitungsgebundenen, Ausgangs-Schnittstelle (17) zur Übertragung der gespeicherten Daten in das mobile Kommunikations-Endgerät (3).

## Beschreibung

Die Erfindung betrifft eine Vorrichtung zur Aufnahme eines mobilen Kommunikations-Endgerätes oder zum Anschluß an ein solches zur Übertragung von Daten, insbesondere Text- und/ oder Bilddaten, die nicht über die Luftschnittstelle eines Mobilfunk-Netzes empfangen worden sind. Der Begriff "mobiles Kommunikations-Endgerät" umfaßt hierbei alle Arten von drahtlosen Kommunikations-Endgeräten einschließlich zellularer oder schnurloser Telefone oder sonstiger funkbasierter Kommunikations-Endgeräte.

Mobile Kommunikations-Endgeräte werden heute über Batterien oder Akkus, also über elektrochemische Energiespeicher mit Energie versorgt. Da diese Energiespeicher nach einigen Stunden Sprechzeit bzw. einigen Tagen Standby aufgeladen werden müssen, werden sie zu diesem Zweck an Ladestationen oder Ladegeräte angeschlossen. Solche Ladestationen oder Ladegeräte können z. B. in Wohnungen, Hotelzimmern, am Arbeitsplatz, in öffentlichen Personenverkehrsmitteln oder in Autos vorhanden sein oder dem Benutzer zur Verfügung gestellt werden. Sie sind normalerweise als Vorrichtungen (Ladeschalen, Basisstationen von Schnurlostelefonen, etc.) zur Aufnahme des Kommunikations-Endgerätes oder als Vorrichtungen zum Anschluß (Ladegeräte) an mobile Kommunikations-Endgeräte ausgeführt.

Weitere Vorrichtungen zur Aufnahme eines mobilen Kommunikations-Endgerätes oder zum Anschluß an ein solches Endgerät müssen nicht unbedingt dem Aufladen der Energiespeicher dienen, sondern können auch der Funktionserweiterung der Kommunikations-Endgeräte dienen. Solche Vorrichtungen finden Anwendung beispielsweise in Autos. Auch Festnetzadapter für zellulare Funktelefone oder Notebooks, die über eine Infrarotverbindung mit dem mobilen Endgerät in Verbindung stehen, sind Beispiele für Vorrichtungen dieser Art. Natürlich können solche Funktionserweiterungen in einigen Fällen auch gleichzeitig Ladegeräte sein.

Moderne mobile Kommunikations-Endgeräte verfügen heute durchweg über Anzeigeeinrichtungen (Displays) zur Wiedergabe von Texten oder von grafischen Daten, wie z.B. von Bildern oder von Bildfolgen. Es ist bekannt, daß die Kommunikationsleistungs-Anbieter sowie andere Datenanbieter das Display eines mobilen Kommunikations-Endgerätes zum Anzeigen von Informationen und Werbung in Form von Textnachrichten benutzen. Diese Textnachrichten werden über die Funkstrecke eines Mobilfunk-netzes übertragen und sind daher für die Anbieter kostenpflichtig.

Aufgabe der vorliegenden Erfindung ist es, eine kostengünstige Informations- und Werbemöglichkeit für die Datentanbieter zu schaffen, die eine möglichst große Anzahl von Teilnehmern anspricht.

Diese Aufgabe wird durch eine Vorrichtung mit den Merkmalen des Anspruchs 1 gelöst.

Die Erfindung schließt den wesentlichen Gedanken ein, eine Vorrichtung mit einem Speicher zu schaffen, in dem Daten gespeichert werden, die auf dem Display eines Endgerätes dargestellt werden können. Weiterhin schließt die Erfindung den Gedanken des Versehens einer Schnittstelle, zur Übertragung solcher Daten an das Endgerät ein. Sobald das Endgerät an diese Schnittstelle angeschlossen wird, werden die gespeicherten Daten ganz oder teilweise an das Endgerät übertragen und auf seinem Display angezeigt.

Diese Daten werden bevorzugt in einem einschiebbaren Speichermodul gespeichert und den Teilnehmern angeboten, grundsätzlich können sie aber auch über ein Daten- oder Telekommunikationsnetz, insbesondere ein IP-Netz oder Telefon-Festnetz (ISDN) von der Vorrichtung empfangen werden.

Vorzugsweise enthält die Vorrichtung einen Detektor, mit dessen Hilfe der Anschluß des Endgerätes an die Vorrichtung detektiert wird. Über ein geeignetes Übertragungsprotokoll werden die gespeicherten Daten an das Endgerät übertragen, und zwar sobald und solange das Endgerät über die Schnittstelle mit der Vorrichtung in Verbindung steht. Dabei ist es nicht notwendig, daß das Endgerät aufgeladen wird.

Eine besonders vorteilhafte und breit einsetzbare Ausführungsform der Erfindung sieht vor, daß die Vorrichtung ein Ladeteil aufweist, das an die Netzstromversorgung angeschlossen ist und zugleich mit der erwähnten Daten-Schnittstelle der Vorrichtung verbunden ist. Somit wird über ein und dieselbe Anschlusskonfiguration nicht nur die Übertragung von gespeicherten Daten, sondern auch das Aufladen des Kommunikations-Endgerätes erreicht.

Eine besonders kostengünstige Ausführungsform der erfindungsgemäßen Vorrichtung sieht vor, daß die Speichereinrichtung ein fest eingebauter, fabrikseitig programmierter Speicher ist, der gespeicherte Text- und/oder Bilddaten enthält und für den Teilnehmer kostenlos zusammen mit der Vorrichtung angeboten wird.

Eine andere Ausführungsform der Erfindung sieht vor, daß die Text- und/oder Bilddaten über ein Daten- oder Telekommunikationsnetz, insbesondere ein IP-Netz an die Vorrichtung permanent übertragen werden und von einer zweiten Schnittstelle, die in der Vorrichtung vorgesehen ist, aufgenommen werden. Die derart empfangenen Daten werden von der Schnittstelle an die Speichereinrichtung der Vorrichtung übertragen und bis zum Anschluß des Endgerätes an die Vorrichtung gespeichert.

Vorzugsweise enthält die Vorrichtung einen zusätzlichen Speicher zur Speicherung von mehreren länderspezifischen Versionen der auf dem Display darzustellenden Daten sowie eine Auswertungseinheit zur Auswertung einer Heimatnetzkennung des mobilen Endgerätes mit der Folge, daß eine zu dieser Heimatnetzkennung passende länderspezifische Version der gespeicherten Daten an das Kommunikations-Endgerät übertragen wird.

Das mobile Kommunikations-Endgerät, das mit der vorgeschlagenen Vorrichtung verwendet wird, wird insbesondere eine Display-Steuereinheit enthalten, die durch die Ladebuchse des Kommunikations-Endgerätes mit der Schnittstelle der Vorrichtung verbunden ist zur Übernahme von gespeicherten Daten und zur Anzeige dieser Daten auf dem Display.

Vorteile und Zweckmäßigkeiten der Erfindung ergeben sich im übrigen aus den Unteransprüchen sowie der nachfolgenden Beschreibung bevorzugter Ausführungsbeispiele anhand der Figuren. Von diesen zeigen:
Fig. 1 ein schematisches Funktions-Blockschaltbild zur Erläuterung einer Vorrichtung zur Aufnahme eines mobilen Kommunikations-Endgerätes gemäß einer Ausführungsform der Erfindung und
Fig. 2 ein schematisches Funktions-Blockschaltbild zur Erläuterung einer Vorrichtung zur Aufnahme eines mobilen Kommunikations-Endgerätes gemäß einer weiteren Ausführungsform der Erfindung.

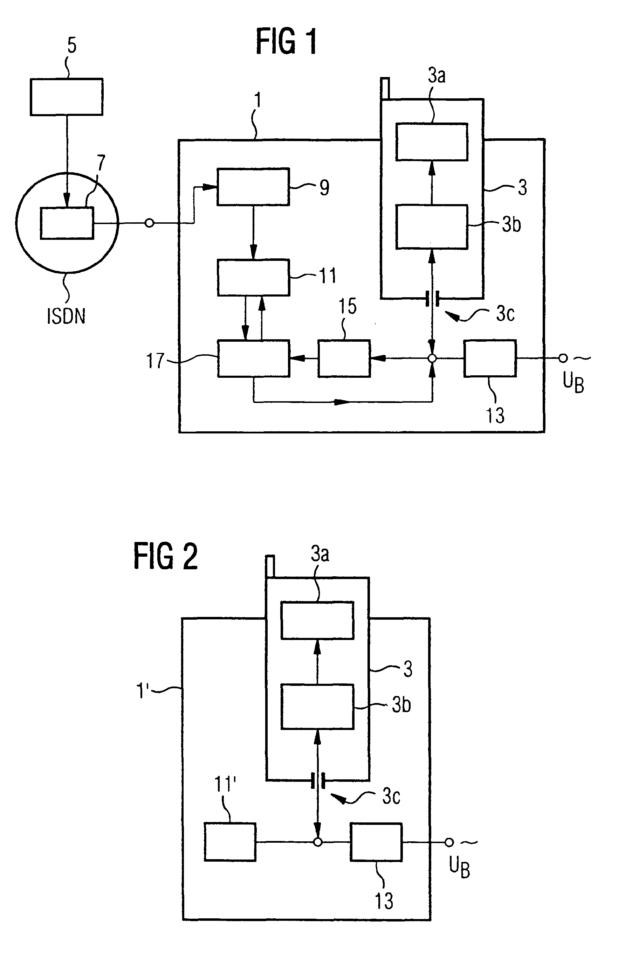

Fig. 1 zeigt eine schematische Darstellung eines erfindungsgemäßen Ladegerätes 1 mit einem Mobiltelefon 3, das an das Ladegerät 1 angeschlossen ist, sowie den Datenfluß von einem Datenanbieter-Endgerät 5 über ein Telefonnetz ISDN an das Ladegerät und zu einem Display 3a des Mobiltelefons.

Der Aufbau des Telefonnetzes ISDN ist an sich bekannt und nicht näher dargestellt. Der Datenanbieter ist mit Mehrdienst-Endgeräten über einen ISDN-Anschluß an das Telefon-Festnetz angeschlossen. Das Mehrdienst-Endgerät 5 ist ein PC mit den notwendigen Schnittstellen, Ergänzungskarten und Kommunikations-Softwaremodulen.

Die Text- und/oder Bilddaten werden über eine ISDN-Vermittlungsstelle 7 in das Ladegerät über eine Eingangs-Schnittstelle 9 übertragen und in einer Speichereinrichtung 11 gespeichert. Das Ladegerät 1 ist über ein Ladeteil 13 an die Netzstromversorgung UB angeschlossen, um das eingesetzte Mobiltelefon 3 aufzuladen.

Sobald das Mobiltelefon 3 an das Ladegerät 1 angeschlossen wird, wird ein Detektionssignal von einem Detektor 15, der zwischen einer Ladebuchse 3c des Kommunikations-Endgerätes 3 und einer Ausgangs-Schnittstelle 17 des Ladegerätes 1 angeordnet ist, an die Schnittstelle 17 ausgegeben. Die in der Speichereinrichtung 11 gespeicherten Daten werden dann über die Ausgangs-Schnittstelle 17 und über die Ladebuchse 3c des Mobiltelefons 3 von dessen Displaysteuerung 3b übernommen und auf dem Display 3a angezeigt, und zwar solange das Endgerät 3 an die Vorrichtung angeschlossen ist.

Eine weitere (nicht dargestellte) Ausführungsform der erfindungsgemäßen Vorrichtung sieht vor, daß die Speichereinrichtung zusätzliche Speicher zur Speicherung von mehreren länderspezifischen Versionen von darzustellenden Daten sowie eine Abfrageeinheit zur Abfrage der Heimatnetzkennung des mobilen Kommunikations-Endgerätes und eine Auswertungseinheit zur Auswertung dieser Heimatnetzkennung des mobilen Endgerätes aufweist. Zu der abgefragten Heimatnetzkennung wird die passende länderspezifische Version der in der Speichereinrichtung gespeicherten Daten über die Daten-Schnittstelle der Vorrichtung und durch die Ladebuchse in das Mobiltelefon übertragen.

Fig. 2 zeigt eine weitere, besonders kostengünstige Ausführungsform eines Ladegerätes 1' zur Aufnahme eines Mobiltelefons 3. Das Ladegerät 1' weist ebenso wie die oben beschriebene Vorrichtung ein Ladeteil 13 auf, das an die Netzstromversorgung UB angeschlossen ist und zum Aufladen des Mobiltelefons dient. Dieses ist über seine Ladebuchse 3c einerseits mit dem Ladeteil 13 und andererseits mit einem einschiebbaren Speichermodul 11 der Vorrichtung verbunden. Das Speichermodul 11 enthält gespeicherte Werbebotschaften, Logos o. ä., die von einem Anbieter von Waren oder Dienstleistungen den Teilnehmern kostenlos zusammen mit der Vorrichtung oder aber auch separat angeboten werden. Sobald das Kommunikations-Endgerät 3 aufgeladen wird, werden diese gespeicherten Daten über eine Displaysteuereinheit 3b, die mit der Ladebuchse 3c des Kommunikations-Endgerätes 3 verbunden ist, übertragen und erscheinen daher auf dem Display 3a des Endgerätes 3.

Eine weitere, nicht dargestellte Ausführungsform der erfindungsgemäßen Vorrichtung sieht vor, daß die Vorrichtung kein Ladeteil aufweist und lediglich als Aufnahmehalterung dient. Eine solche Vorrichtung kann beispielsweise als eine einfache Autohalterung für ein Mobilfunk-Endgerät oder aber auch als eine Endgerät-Wandhalterung, die in der Wohnung oder in Hotelzimmern angebracht ist, hergestellt werden. Diese Ausführungsform kann sowohl als eine Vorrichtung gemäß Fig. 1 als auch als eine Vorrichtung gemäß Fig. 2 realisiert werden.

Eine weitere, ebenfalls nicht dargestellte Ausführungsform der erfindungsgemäßen Vorrichtung sieht vor, daß die Text-und/oder Bilddaten nicht über ein Telefon-Festnetz, sondern über ein intelligentes Netz, insbesondere das Internet, an die Vorrichtung übertragen werden.

Darüber hinaus kann die erfindungsgemäße Vorrichtung nicht nur zur Aufnahme eines Kommunikations-Endgerätes, sondern auch zum Anschluß an ein Kommunikations-Endgerät über eine Zuleitung mit Anschlußstecker gefertigt werden.

## Patentansprüche

1. Vorrichtung (1; 1') zur Aufnahme eines mobilen Kommunikations-Endgerätes (3) oder zum Anschluß an ein solches zur Übertragung von Daten, insbesondere Text- und/oder Bilddaten, zur Anzeige bzw. Ausgabe über das Kommunikations-Endgerät, mit
- einer Speichereinrichtung (11) zur Speicherung der Daten und
- einer, insbesondere leitungsgebundenen, Ausgangs-Schnittstelle (17) zur Übertragung der gespeicherten Daten in das mobile Kommunikations-Endgerät (3).

2. Vorrichtung nach Anspruch 1,
**gekennzeichnet durch**
einen Detektor (15) zum Detektieren eines Anschlusses des Kommunikations-Endgerätes (3) an die Vorrichtung (1) und zum Ausgeben eines Datenübertragungssignals an die Ausgangs-Schnittstelle (17), die mit der Speichereinrichtung (11) verbunden ist.

3. Vorrichtung nach einem der Ansprüche 1 oder 2,
**gekennzeichnet durch**
ein Ladeteil (13), das an die Netzstromversorgung angeschlossen ist und einen Ladestecker oder eine Ladebuchse aufweist, der/die zugleich mit der Daten-Schnittstelle (17) der Vorrichtung (1) verbunden ist.

4. Vorrichtung nach Anspruch 1,
**dadurch gekennzeichnet,** daß
die Speichereinrichtung (11) ein separates einschiebbares Speichermodul ist.

5. Vorrichtung nach einem der vorangehenden Ansprüche,
**gekennzeichnet durch**
eine Eingangs-Schnittstelle (9) zum Empfangen von Text- und/ oder Bilddaten über ein Daten- oder Telekommunikationsnetz (ISDN), insbesondere ein IP-Netz oder Telefonfestnetz, und zur Übertragung der empfangenen Daten an die Speichereinrichtung (11).

6. Vorrichtung nach einem der vorangehenden Ansprüche,
**dadurch gekennzeichnet**, daß
die Speichereinrichtung (11) mindestens einen zusätzlichen Speicher zur Speicherung von mehreren länderspezifischen Versionen der Daten enthält.

7. Vorrichtung nach Anspruch 6,
**gekennzeichnet durch**
eine Abfrageeinheit zur Abfrage der Heimatnetzkennung des als Mobilfunk-Engerät ausgebildeten mobilen Kommunikations-Endgerätes (1) und eine Auswertungseinheit zur Auswertung dieser Heimatnetzkennung.

8. Mobiles Kommunikations-Endgerät zur Übernahme von Daten, insbesondere von Text- und/oder Bilddaten, von einer Vorrichtung gemäß einem der vorangehenden Ansprüche,
**dadurch gekennzeichnet,** daß
eine Displaysteuereinheit (3b) des Kommunikations-Endgerätes (3) zur Übernahme von gespeicherten Daten und ihrer Wiedergabe auf einem Display (3a) mit der Ausgangs-Schnittstelle (17) der Vorrichtung (1) verbunden ist.

9. Mobiles Kommunikations-Endgerät nach Anspruch 8,
**gekennzeichnet durch**
eine Ladebuchse (3c) zur Verbindung der Displaysteuereinheit (3b) des Kommunikations-Endgerätes (3) mit der Ausgangs-Schnittstelle (17) der Vorrichtung (1).
